## Europäisches Patentamt

## European Patent Office

## Office européen des brevets

(19)

(11) Veröffentlichungsnummer: **0 080 107**

**B1**

(12) **EUROPÄISCHE PATENTSCHRIFT**

(45) Veröffentlichungstag der Patentschrift:
**13.08.86**

(21) Anmeldenummer: **82110326.4**

(22) Anmeldetag: **09.11.82**

(51) Int. Cl.⁴: **F 16 K 17/02,** F 16 K 31/08 //
H01G9/12

(54) Überdruckventil für Behälter.

(30) Priorität: **20.11.81 DE 3146030**

(43) Veröffentlichungstag der Anmeldung:
**01.06.83 Patentblatt 83/22**

(45) Bekanntmachung des Hinweises auf die Patenterteilung:
**13.08.86 Patentblatt 86/33**

(84) Benannte Vertragsstaaten:
**CH DE FR GB IT LI SE**

(56) Entgegenhaltungen:
**DE-A-1 564 680**
**FR-A-1 425 390**
**FR-A-1 507 256**
**FR-A-2 252 523**
**FR-A-2 380 479**
**GB-A-2 080 492**
**US-A-2 646 071**
**US-A-3 105 511**
**US-A-4 196 886**

(73) Patentinhaber: **Siemens Aktiengesellschaft Berlin und München, Wittelsbacherplatz 2, D-8000 München 2 (DE)**

(72) Erfinder: **Seessle, Roland, Dipl.- Ing., Fichtenweg 11, D-7924 Steinheim (DE)**
Erfinder: **Maier, Werner, Steinheimer Weg 31, D-7923 Königsbronn (DE)**

**Beschreibung**

Die Erfindung betrifft ein Überdruckventil für Behälter, insbesondere Behälter, die zu Kühlzwecken von einer wärmeableitenden Flüssigkeit umgeben sind, bestehend aus einem mit einer Eintrittsbohrung versehenen Ventilkörper aus einem ferromagnetischen Werkstoff und einem Schließelement aus einem scheibenförmigen Permanentmagneten, wobei zwischen Permanentmagnet und Ventilkörper eine Dichtung angeordnet ist.

Es gibt technische Anwendungsgebiete, bei denen in hermetisch dichte Behälter beispielsweise elektrische Bauelemente oder Getriebe eingebaut werden. Beim Betrieb erzeugen die eingebauten Gegenstände Wärme, die dadurch abgeführt wird, daß die Behälter in eine Kühlflüssigkeit eingetaucht werden.

Es kann nun vorkommen, daß durch irgendwelche physikalischen oder chemischen Einflüsse im Innern des Behälters, beispielsweise durch gebildete Gase, ein Überdruck entstehen kann. Es ist erforderlich, diesen Überdruck abzubauen, damit es nicht zur Zerstörung des Behälters oder der darin eingebauten Gegenstände kommen kann.

Es sind Überdruckventile bekannt, bei denen ein Dichtungselement durch die Rückstellkraft einer Feder gegen eine in einem Ventilkörper angeordnete Bohrung gedrückt wird. Siehe z.B. die DE-A-1.564.680. Diese Ventile haben den Nachteil, daß sie, bedingt durch die Federkraft, nach dem Abblasen in ihre Ausgangslage "zurückkriechen" Das heißt, es bildet sich zwischen den dichtenden Elementen ein immer kleiner werdender Spalt, der aufgrund der Kapillar-wirkung die den Behälter umgebende Kühlflüssigkeit in den Behälter eindringen läßt. Dieser Effekt ist äußerst unerwünscht, da in den Behälter gelangende Kühlflüssigkeit die Funktionsfähigkeit der darin angeordneten Elemente beeinträchtigen kann.

Aus der FR-A-14 25 390 ist ein Überdruckventil der eingangs genannten Art bekannt. Als Dichtung dient ein Ring, der zwischen Ventilkörper und Permanentmagnet angeordnet ist und sich in einer ringförmigen Aussparung am Ventilkörper befindet. Bei der Montage dieses Ventils sind zusätzliche Verfahrensschritte erforderlich, da der Dichtungsring in die ringförmige Aussparung eingesetzt werden muß.

Aus der FR-A-22 52 523 ist ein Überdruckventil bekannt, bei dem das Schließelement von einer zylindrischen Kappe abgedeckt wird. Bemessungsgrundlagen für Schließelement und Abdeckkappe sind in der Druckschrift nicht angeführt.

Die geschilderten Überdruckventile mit magnetischer Abdichtung zeichnen sich gegenüber den Federventilen dadurch aus, daß sie eine progressive Schließcharakteristik besitzen, das heißt daß bei ihnen die Rückstellkraft im gegensatz zu den Federventilen mit kleiner werdendem Spalt zunimmt. Hierdurch wird ein Eindringen von Kühlflüssigkeit in den Behälter ausgeschlossen.

Aus der US-A-41 96 886 ist es bekannt, Dichtungen aus Acrylnitril-Butadien-Kautschuk zu verwenden.

Aufgabe der Erfindung ist es, ein Überdruckventil der eingangs genannten Art anzugeben, das eine gute Abdichtwirkung besitzt und das gewährleistet, daß auch nach dem Ansprechen der Behälter in sicherer Weise dicht abgeschlossen wird.

Diese Aufgabe wird erfindungsgemäß dadurch gelöst, daß die Dichtung als Elastomerschicht ausgebildet und auf der der Eintrittsbohrung zugewandten Seite des Permanentmagneten angeordnet ist, daß der Ventilkörper eine spitz zulaufende Ventilsitzlippe besitzt, daß das Ventil von einer Kunststoffkappe abgedeckt ist, und daß die Innenabmessungen der Kunststoffkappe derart gestaltet sind, daß der Permanentmagnet auch bei einer Verschiebung aus der symmetrischen Lage stets die volle Fläche abdeckt, die sich innerhalb der Ventilsitzlippe befindet.

Zweckmäßige Ausgestaltungen des Überdruckventils gemäß der Erfindung sind in den Unteransprüchen angeführt.

Die Vorteile des Gegenstandes der Erfindung werden anhand der folgenden Ausführungsbeispiele erläutert.

In der dazugehörigen Zeichnung zeigen:
Fig. 1 ein Schnittbild eines erfindungsgemäßen Überdruckventils,
Fig. 2 die Rückstellkraft in Abhängigkeit von der Weite des Öffnungsspaltes und
Fig. 3 ein Schnittbild einer weiteren Ausführungsform.

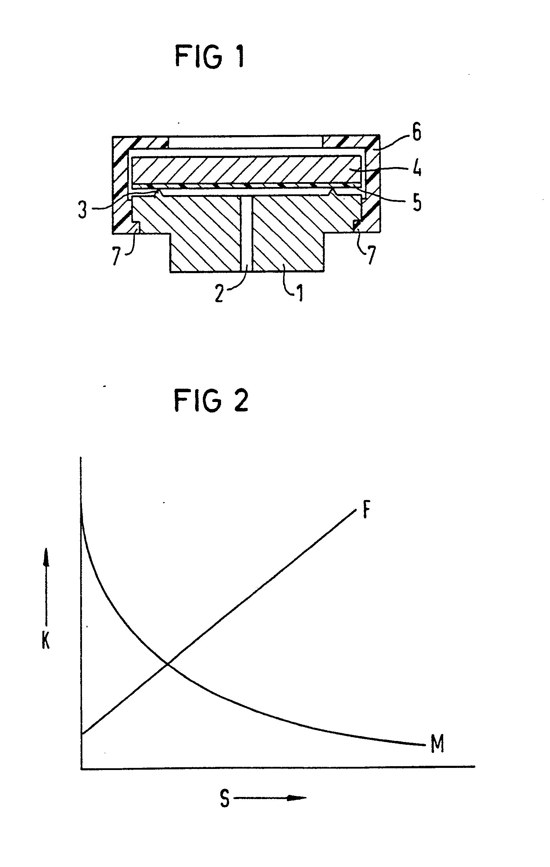

In der Fig. 1 ist ein Schnittbild eines Überdruckventils nach der Erfindung dargestellt, bei dem in einem Ventilkörper 1 aus einem ferromagnetischen Material eine Bohrung 2 angeordnet ist. Um eine gute Dichtungswirkung zu erzielen, ist ferner am Ventilkörper 1 eine spitz zulaufende Dichtungslippe oder Ventilsitzlippe 3 angeordnet. Das Schließ- oder Dichtungselement besteht aus einem scheibenförmigen Permanentmagneten 4, der auf seiner der Ventilöffnung 2 zugewandten Seite eine Elastomeschicht 5 besitzt, welche im Zusammenhang mit der Dichtungslippe 3 eine sichere Abdichtung des Behälters gewährleistet. Das Ventil ist ferner mit einer Abdeckkappe 6 versehen, deren Innenabmessungen derart gestaltet sind, daß der Permanentmagnet 4 auch bei einer Verschiebung von der symmetrischen Lage stets die volle Fläche abdeckt, die sich innerhalb der Dichtungslippe 3 befindet.

Es ist vorteilhaft, wenn die Abdeckkappe 6 in eine am Ventilkörper 1 angeordnete Nut 7 eingreift. Dadurch wird eine sichere Haltung der Abdeckkappe 6 erreicht.

Falls die den Behälter umgebende Kühlflüssigkeit ein Mineralöl ist, ist es zweckmäßig, für die Elastomerdichtung 5 einen ölbeständigen Werkstoff, beispielsweise Acrylnitril-Butadien-Kautschuk zu verwenden.

Der Durchmesser der Bohrung 2 richtet sich nach dem gewünschten Anwendungszweck des Überdruckventils. So gibes Anwendungsfälle, bei denen zwar der Abbau eines langsam ansteigenden Überdrucks erwünscht ist, bei denen aber ein spontaner Druckanstieg nicht ausgeglichen werden soll.

Ein derartiger Anwendungsfall liegt beispielsweise dann vor, wenn in einem Behälter Kondensatoren für Wechselspannungsbetrieb eingebaut sind, die zur Vermeidung innerer Teilentladungen (Sprühen) mit Isolierölen imprägniert sind. Durch die Imprägnierung wird zwar die Sprühintensität stark reduziert aber nicht ganz beseitigt. Dieses Sprühen hat eine Gasentwicklung zur Folge, die nach längerem Betrieb zu einem Überdruck im Inneren des Behälters führen kann, so daß die bei derartigen Kondensatoren übliche Überdruckabreißsicherung anspricht und der Kondensator damit vom Netz getrennt wird. Aus konstruktiven Gründen liegt der Ansprechdruck dieser Überdruckabreißsicherung bei etwa 1,0 bis etwa 2,5 bar.

Dieser durch Sprüherscheinungen sich langsam aufbauende Überdruck kann in vorteilhafter Weise mit Hilfe des erfindungsgemäßen Überdruckventils abgebaut werden. Andererseits ist es nicht erwünscht, einen spontanen Druckanstieg, wie er beispeiesweise bei elektrischen Durchschlägen des Kondensators auftritt, abzubauen, da sonst die Gefahr einer explosionsartigen Zerstörung des Kondensators besteht.

Dies erreicht man dadurch, daß man für die Bohrung 2 einen sehr kleinen Durchmesser wählt. Dadurch wird der Innendruck bei einem spontanen Druckanstieg derart langsam abgebaut, daß die Überdruckabreißsicherung ansprechen kann und somit Folgeschäden vermieden werden. Andererseits stellt der kleine Querschnitt der Bohrung 2 für sich langsam aufbauende Innendruck kein Hindernis dar, so daß in diesem Fall ein sicherer Druckabbau gewährleistet wird, ohne daß Kühlflüssigkeit in das Innere des Behälters gelangen kann.

Damit die Überdruckabreißsicherung in dem beschriebenen Anwendungsfall nicht ansprechen kann, muß der Ansprechdruck des Ventils kleiner 1,0 bar sein. Dies erreicht man durch geeignete Dimensionierung der magnetischen Werkstoffe, sowie der innerhalb der Dichtungslippe 3 angeordneten Fläche (Krafteinwirkung auf den Permanentmagneten 4), und gegebenenfalls durch die Dicke der Elastomerdichtung 5.

Die Fig. 2 zeigt ein Diagramm der Rückstellkraft K in Abhängigkeit von der Weite s des Öffnugsspaltes für ein herkömmliches Ventil mit Rückstellfeder (F) sowie für das erfindungsgemäße Ventil mit magnetischer Rückstellung (M). Wie der Figur zu entnehmen ist, steigt die Rückstellkraft K für das erfindungsgemäße Ventil mit kleiner werdender Spaltöffnung steil an, wodurch ein sicheres Schließen bei kleiner werdendem Überdruck gewährleistet, ist, so daß keine Kühlflüssigkeit ins Innere des Behälters gelangen kann.

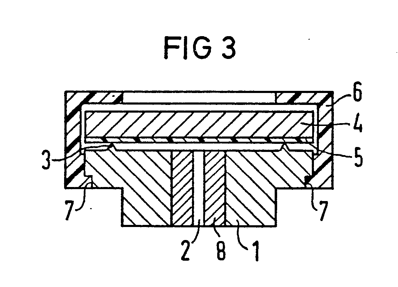

Fig. 3 stellt ein Ausführungsbeispiel für Bohrungen 2 sehr kleinen Querschnitts dar. Hierbei ist es schwierig, derartige Bohrungen im Ventilkörper 1 anzubringen. In diesem Fall ist es vorteilhaft, den Ventilkörper 1 mit einer Bohrung größeren Durchmessers zu versehen und in diese Bohrung ein sogenanntes handelsübliches Kapillarrohr 8 einzupassen. Dadurch erhält man vorteilhaft eine preisgünstige Herstellung auch sehr kleiner Ventilöffnungen.

## Patentansprüche

1. Überdruckventil für Behälter, insbesondere Behälter die zu Kühlzwecken von einer wärmeableitenden Flüssigkeit umgeben sind, bestehend aus einem mit einer Eintrittsbohrung (2) versehenen Ventilkörper (1) aus einem ferromagnetischen Werkstoff und einem Schließelement aus einem scheibenförmigen Permanentmagneten (4), wobei zwischen Permanentmagnet (4) und Ventilkörper (1) eine Dichtung angeordnet ist, dadurch gekennzeichnet, daß die Dichtung als Elastomerschicht (5) ausgebildet und auf der der Eintrittsbohrung (2) zugewandten Seite des Permanentmagneten (4) angeordnet ist, daß der Ventilkörper (1) eine spitz zulaufende Ventilsitzlippe (3) besitzt, daß das Ventil von einer Kunststoffkappe (6) abgedeckt ist, und daß die Innenabmessungen der Kunststoffkappe (6) derart gestaltet sind, daß der Permanentmagnet (4) auch bei einer Verschiebung aus der symmetrischen Lage stets die volle Fläche abdeckt, die sich innerhalb der Ventilsitzlippe (3) befindet.

2. Überdruckventil nach Anspruch 1, dadurch gekennzeichnet, daß die Eintrittsbohrung (2) durch ein im Ventilkörper (1) angeordnetes Kapillarrohr (8) gebildet wird.

3. Überdruckventil nach einem der Ansprüche 1 bis 3, dadurch gekennzeichnet, daß die Elastomerschicht (5) aus Acrylnitril-Butadien-Kautschuk besteht.

4. Überdruckventil nach einem der Ansprüche 1 bis 4, dadurch gekennzeichnet, daß die Abdeckkappe (6) in eine am Ventilkörper (1) angeordnete Nut (7) eingreift.

5. Überdruckventil nach einem der Ansprüche 1 bis 5, dadurch gekennzeichnet, daß die Eintrittsbohrung (2) einen Durchmesser von 0,15 mm aufweist.

## Claims

1. A pressure-relief valve for a container, in particular a container which, for cooling purposes, is surrounded by a heat-removing liquid, consisting of a valve body (1) which is provided with an inlet bore (2) and is made of a thermomagnetic material and a closing element formed by a disc-shaped permanent magnet (4), a seal being arranged between the permanent magnet (4) and the valve body (1), characterised in that the seal is in the form of an elastomeric layer (5) arranged on that side of the permanent magnet (4) which faces towards the inlet bore (2); that the valve body (1) is provided with a tapered valve seat lip (3); that the valve is covered by a synthetic resin cap (6); and that the internal dimensions of the synthetic resin cap (6) are such that even when it is shifted out of the symmetrical position, the permanent magnet (4) always covers the entire surface located within the valve seat lip (3).

2. A pressure-relief valve as claimed in Claim 1, characterised in that the inlet bore (2) is formed by a capillary tube (8) arranged in the valve body (1).

3. A pressure-relief valve as claimed in one of Claims 1 to 3 (sic), characterised in that the elastomeric layer (5) consists of acrylonitrile-butadiene rubber.

4. A pressure-relief valve as claimed in one of Claims 1 to 4 (sic), characterised in that the covering cap (6) engages in a groove (7) in the valve body (1).

5. A pressure-relief valve as claimed in one of Claims 1 to 5 (sic), characterised in that the inlet bore (2) has a diameter of 0.15 mm.

## Revendications

1. Soupape de sûreté en cas de surpression dans des récipients, notamment des récipients qui, à des fins de refroidissement, sont entourés d'un liquide dissipant la chaleur, constituée d'un corps de soupape (1) en un matériau ferromagnétique muni d'un perçage d'entrée (2) et d'un obturateur constitué d'un aimant permanent (4) en forme de disque, une garniture d'étanchéité étant interposée entre l'aimant permanent (4) et le corps de soupape (1), caractérisée en ce que la garniture d'étanchéité affecte la forme d'une couche en élastomère (5) et est disposée du côté de l'aimant permanent (4) qui est tourne vers le perçage d'entrée (2), en ce que le corps de soupape (1) possède une lèvre (3) formant siège de soupape, qui se termine en pointe, en ce que la soupape est recouverte d'un capot (6) en matière plastique et en ce que les dimensions intériures du capot en matière plastique sont telles que l'aimant permanet (4), même dans le cas d'un déplacement hors de la position de symétrie, recouvre toujours toute la surface qui se trouve à l'intérieur de la lèvre (3) formant siège de la soupape.

2. Soupape de sûreté en cas de surpression, suivant la revendication 1, caractérisée en ce que le perçage d'entrée (2) est formé d'un tube capillaire (8) disposé dans le corps de soupape.

3. Soupape de sûreté en cas de surpression suivant l'une des revendications 1 à 3, caractérisée en ce que la couche en élastomère (5) est en caoutchouc acrylonitrile-butadiène.

4. Soupape de sûreté en cas de surpression suivant l'une des revendications 1 à 4, caractérisée en ce que le capot de recouvrement (6) pénètre dans une gorge (7) disposée sur le corps de soupape (1).

5. Soupape ce sûreté en cas de surpression suivant l'une des revendications 1 à 4, caractérisée en ce que le perçage d'entrée (2) a un diamètre de 0,15 mm.

# FIG 1

# FIG 2

# FIG 3